# EUROPEAN PATENT APPLICATION

(11) **EP 1 791 333 A1**
(43) Date of publication of application: **30.05.2007**
(21) Application number: 06023828.4
(22) Date of filing: 16.11.2006
(51) Int. Cl.: H04M 1/2745

(54) **Function information notifying system and function information notifying method**

(30) Priority: 28.11.2005 JP 2005341545
(71) Applicant: NTT DoCoMo INC., Chiyoda-ku Tokyo 100-6150 (JP)
(72) Inventor: Natsuno, Takeshi Int. Prop.Dep. NTT DoCoMo, Inc., Tokyo 100-6150 (JP); Kikuchi, Daisuke Int. Prop.Dep. NTT DoCoMo, Inc., Tokyo 100-6150 (JP); Maeda, Kenichi Int. Prop.Dep. NTT DoCoMo, Inc., Tokyo 100-6150 (JP)
(74) Representative: Kuhnen & Wacker

(57) **Abstract**

A user terminal A inquires of a user terminal B for the terminal function information. Upon receiving a request signal from the user terminal Avia a communication control section , the user terminal B checks whether the user permits transmission of the terminal function information to the user terminal A, and then, transmits the terminal function information to the user terminal A. Upon receiving the terminal function information from the user terminal B, the user terminal A displays the terminal function information of the user terminal B in a display.

## Description

The present disclosure relates to subject matters contained in Japanese Patent Application No.2005-341545 filed on November 28, 2005, which are expressly incorporated herein by reference in its entireties.

### BACKGROUND OF THE INVENTION

### 1. Field of the Invention

The present invention relates to a function information notifying system and function information notifying method.

### 2. Description of the Prior Art

In recent years, communication terminals have become sophisticated, and a single communication terminal is provided with a plurality of functions. Then, in communicating with another communication terminal, the communication terminal selects a function to use from the plurality of functions. In such selection, prior to communication, it is generally not notified what functions a communicating-party terminal has or what functions are usable.

There is a technique as disclosed in JP 2001-290789, as a technique enabling recognition in real time on what functions (for example, TV phone function and the like) the communicating party has as a communication terminal, what functions are currently usable in the communicating party, and the like. It is disclosed in this publication that a communication terminal searches for a communicable function between different communication terminals, and performs communication in an environment corresponding to a communicating-party terminal in the communication.

In recent years, there have been more occasions when a new function is added to the communication terminal, and it has been demanded that a user is capable of checking what functions a communication terminal of a communicating party has and selecting a usable function from the functions. However, in the technique as described in the above-mentioned publication, the function of a communication terminal of a communicating party is automatically set, and therefore, such usability is not resolved that a user is capable of checking what functions a communication terminal of a communicating party has and selecting a usable function from the functions.

### SUMMARY OF THE INVENTION

It is an obj ect of the invention to provide a function information notifying system and function information notifying method with excellent usability enabling a user to check what functions a communication terminal of a communicating party has and select a usable function from the functions.

A function information notifying system of the invention is a system for notifying function information where terminal function information is transmitted and received between mobile terminals, and a first mobile terminal has a communication section that receives terminal function information of a secondmobile terminal, and a display section that displays the terminal function information.

According to this constitution, the terminal function information is transmitted and received between mobile terminals, and when necessary, displayed in the display section, and it is thus possible to grasp usable function and service in a mobile terminal of a communicating party, and to use the service suitable for the function usable in the mobile terminal of the communicating party. In other words, since it is possible to beforehand know the usable service of the communicating party, the originator is capable of easily determining the function to use in performing communication.

In the function information notifying system of the invention, the communication section preferably transmits a request signal for the terminal function information to the second mobile terminal.

In the function information notifying system of the invention, each of the first mobile terminal and the second mobile terminal preferably has a mode setting section capable of setting a mode to automatically transmit the terminal function information after the completion of a call. According to this constitution, the need is eliminated of user input operation such as operation for a checking screen by a user, thus being useful for the user.

A function information notifying system of the invention is a system for notifying function information in which terminal function information is transmitted and received between mobile terminals via a mobile communication network center, where the mobile communication network center has a database having terminal function information of mobile terminals, and an update section that updates the database with the terminal function information, and a first mobile terminal has a communication section that communicates with the mobile communication network center.

According to this constitution, the terminal function information is transmitted and received between mobile terminals, and it is thus possible to acquire the information of usable function and service in a mobile terminal of a communicating party, and to use the service suitable for the function usable in the mobile terminal of the communicating party. In other words, since it is possible to beforehand know the usable service of the communicating party, the originator is capable of easily determining the function to use in performing communication. Further, since the terminal function information is stored in the mobile communication network center, it is possible to acquire the terminal function information at any time by communicating with the mobile communication network center as necessary.

In the function information notifying system of the invention, the communication section preferably refers to the database of the mobile communication network center in communicating with the mobile communication network center.

In the function information notifying system of the invention, the communication section preferably performs database synchronization processing with the mobile communication network center. According to this constitution, it is possible to collectively acquire the terminal function information to update.

In the function information notifying system of the invention, the first mobile terminal preferably has a display section that displays the terminal function information. According to this constitution, it is possible to grasp in a visual form the information of usable function and service of a mobile terminal of a communicating party.

In the function information notifying system of the invention, the display section preferably distinguishes between a usable terminal function in the first mobile terminal and an unusable terminal function in the first mobile terminal to display. According to this constitution, a user is capable of checking the terminal function and service usable in the mobile terminal of the communicating party at a glance.

A function information notifying method of the invention is a method of notifying function information where terminal function information is transmitted and received between mobile terminals, and has a terminal function information transmitting step of transmitting, in a second mobile terminal, terminal function information to a first mobile terminal, and a display step of displaying, in the first mobile terminal, the terminal function information.

According to this method, the terminal function information is transmitted and received between mobile terminals, and when necessary, displayed in the display section, and it is thus possible to grasp usable function and service in a mobile terminal of a communicating party, and to use the service suitable for the function usable in the mobile terminal of the communicating party. In other words, since it is possible to beforehand know the usable service of the communicating party, the originator is capable of easily determining the function to use in performing communication.

In the function information notifying method of the invention, it is preferable further having a request signal transmitting step of transmitting, in the first mobile terminal, a request signal for the terminal function information to the second mobile terminal, and a first checking step of checking, in the second mobile terminal, whether to transmit the terminal function information after receiving the request signal.

In the function information notifying method of the invention, the terminal function information transmitting step preferably has a second checking step of checking whether to transmit the terminal function information after the completion of a call from the first mobile terminal.

In the function information notifying method of the invention, it is preferable in the terminal function information transmitting step automatically transmitting the terminal function information to the first mobile terminal after the completion of a call from the first mobile terminal. According to this method, the need is eliminated of user input operation such as operation for a checking screen by a user, thus being useful for the user.

A function information notifying method of the invention is a method of notifying function information in which terminal function information is transmitted and received between mobile terminals via a mobile communication network center, and has a terminal function information transmitting step of automatically transmitting, in a second mobile terminal, terminal function information of the second mobile terminal to the mobile communication network center after the completion of a call from a first mobile terminal, and a communication step of communicating, in the first mobile terminal, with the mobile communication network center.

According to this method, the terminal function information is transmitted and received between mobile terminals, and it is thus possible to acquire the information of usable function and service in a mobile terminal of a communicating party, and to use the service suitable for the function usable in the mobile terminal of the communicating party. In other words, since it is possible to beforehand know the usable service of the communicating party, the originator is capable of easily determining the function to use in performing communication. Further, since the terminal function information is stored in the mobile communication network center, it is possible to acquire the terminal function information at any time by communicating with the communication network center as necessary.

In the function information notifying method of the invention, it is preferable in the communication step referring to the database having terminal function information of mobile terminals in the mobile communication network center.

In the function information notifying method of the invention, it is preferable in the communication step performing database synchronization processing with the mobile communication network center. According to this method, it is possible to collectively acquire the terminal function information to update.

In the function information notifying method of the invention, the first mobile terminal preferably has a display step of display the terminal function information. According to this method, it is possible to grasp in a visual form the information of usable function and service of a mobile terminal of a communicating party.

In the function information notifying method of the invention, it is preferable in the display step distinguishing between a usable terminal function in the first mobile terminal and an unusable terminal function in the first mobile terminal to display. According to this method, a user is capable of checking the terminal function and service usable in the mobile terminal of the communicating party at a glance.

### BRIEF DESCRIPTION OF DRAWINGS

The various features of novelty which characterize the invention are pointed out with particularity in the claims attached to and forming a part of this specification. For a better understanding of the invention, itsoperatingadvantages, andspecificobjects attained by its use, reference should be had to the accompanying drawing and descriptive matter in which there is illustrated and described a preferred embodiment of the invention.
FIG. 1 is a diagram illustrating a schematic configuration of a function information notifying system according to an embodiment of the invention;
FIG.2 is a schematic block diagram illustrating a mobile terminal 1 used in the function information notifying system according to the embodiment of the invention;
FIG.3 is a schematic block diagram illustrating a mobile communication network center 3 used in the function information notifying system according to the embodiment of the invention;
FIG.4 is a diagram illustrating a data file of the mobile communication network center in the function information notifying system according to the embodiment of the invention;
FIG.5 is a sequence diagram illustrating a first aspect of a function information notifying method according to the embodiment of the invention;
FIGs. 6A and 6B are diagrams showing display examples in a display of a mobile terminal in the function information notifying method according to the embodiment of the invention;
FIGs. 7A and 7B are another diagrams showing display examples in the display of the mobile terminal in the function information notifying method according to the embodiment of the invention;
FIG.8 is another diagram showing a display example in the display of the mobile terminal in the function information notifying method according to the embodiment of the invention;
FIG.9 is a sequence diagram illustrating a second aspect of the function information notifying method according to the embodiment of the invention;
FIG. 10 is another diagram showing a display example in the display of the mobile terminal in the function information notifying method according to the embodiment of the invention;
FIGs.11A and 11B are another diagrams showing display examples in the display of the mobile terminal in the function information notifying method according to the embodiment of the invention;
FIG.12 is a sequence diagram illustrating a third aspect of the function information notifying method according to the embodiment of the invention;
FIG.13 is another diagram showing a display example in the display of the mobile terminal in the function information notifying method according to the embodiment of the invention;
FIG.14 is a sequence diagram illustrating a fourth aspect of the function information notifying method according to the embodiment of the invention;
FIG.15 is another diagram showing a display example in the display of the mobile terminal in the function information notifying method according to the embodiment of the invention;
FIG.16 is a sequence diagram illustrating a fifth aspect of the function information notifying method according to the embodiment of the invention; and
FIGs.17A and 17B are another diagrams showing display examples in the display of the mobile terminal in the function information notifying method according to the embodiment of the invention.

### DESCRIPTION OF THE PREFERRED EMBODIMENTS

An embodiment of the present invention will specifically be described below with reference to accompanying drawings.

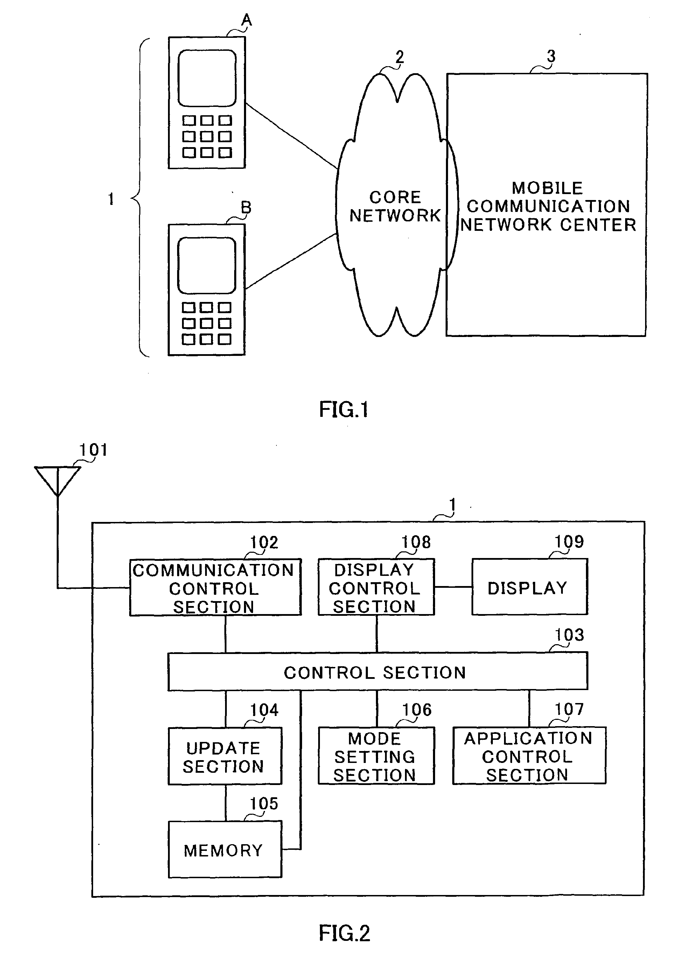

FIG.1 is a diagram illustrating a schematic configuration of a function information notifying system according to an embodiment of the invention. The system as shown in FIG. 1 is mainly comprised of user terminals A and B that are mobile terminals 1, and a mobile communication network center 3 connected to the user terminals A and B via a core network 2 that is a mobile communication network. In the system having such a configuration, the user terminals A and B transmit and receive terminal function information mutually or via the mobile communication network 3 when necessary. In this case, the terminal function information transmitted/received is displayed on a display screen of each of the mobile terminals A and B as necessary.

Herein, the terminal function information includes information of functions usable in the user terminals A and B, for example, such as a TV phone function, IP telephone function, packet call function, HTML mail function, moving image replay function, audio replay function, and IC card function. In addition, the functions usable in the user terminals A and B may be the same or different between the terminals. Further, the terminal function in formation may include information of various native functions usable in the mobile terminals A and B as well as the above-mentioned information of usable service.

FTG.2 is a schematic block diagram illustrating the mobile terminal 1 used in the function information notifying system according to this embodiment of the invention. The mobile terminal 1 is mainly comprised of an antenna 101, a communication control section 102 that performs radio processing on a signal received via the antenna 101, a control section 103 that controls the entire terminal, an update section 104 that updates memory 105 with the terminal function information extracted from the signal subjected to the radio processing, a mode setting section 106 to establish a setting for automatically transmitting the terminal function information of the mobile terminal 1 as a user terminal to another user terminal of a communicating party, an application control section 107 that operates an application, and a display control section 108 that controls display in a display 109.

The communication control section 102 performs predetermined radio processing on a signal with a radio frequency received via the antenna 101 to down-convert in to an intermediate-frequency signal or base band signal, while up-converting an intermediate-frequency signal or baseband signal to transmit via the antenna 101. The down-converted signal (received signal) is output to the control section 103. Transmitted and received signals include the terminal function information, and the transmitted signal further includes a request signal for requesting the terminal function information of another mobile terminal.

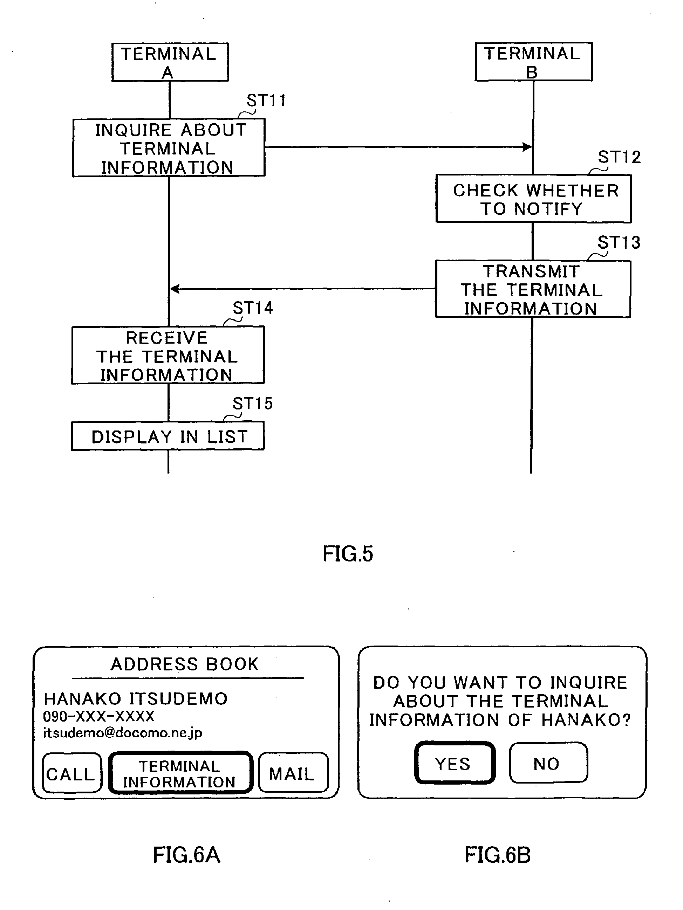

The update section 104 updates the memory 105 with the terminal function information included in the received signal. The memory 105 has an address book, and with the address book are registered telephone numbers, mail addresses and other user information for each communication party. The terminal function information of the user terminal of the communicating party is also registered with the address book (for example, FIG. 6A) . Accordingly, the update section 104 updates the terminal function information transmitted from the communicating party or the terminal function information obtained from the mobile communication network center by referring to or synchronization in the address book of the memory 105.

The update of the address book may be made whenever the information is transmitted from a communicating party, or made by comparing the terminal function information transmitted from a communicating party with the terminal function information registered with the address book and determining that the update is required when both the terminal function information is different from each other. Further, for the timing of update, the update may be made at timing at which the information is transmitted from a communicating party, or made by referring to or obtaining synchronization with the mobile communication network center at regular time intervals. Furthermore, in updating the terminal function information in the user terminal, update checking may be displayed in the display 109 to update the data after checking with the user.

In the foregoing, the case is described where the address book is stored in the memory 105, and the update section 104 updates the address book. In the invention, a configuration is also allowed that as well as the address book, a database is stored which has data files managing the terminal function information for each communicating party, and the update section 104 updates the database. Such a configuration is advantageous in obtaining the terminal function information by synchronization of the database with the mobile communication network center. In addition, the memory 105 stores various information, data and applications. The memory 105 is comprised of ROM, RAM, hard disk and the like, for example.

The control section 103 performs various processing on the received signal subjected to the radio processing in the communication control section 102. For example, the control section 103 stores predetermined information in the memory 105, provides instructions to display in the display 109 a screen for checking whether to transmit the terminal function information to a user terminal of a communicating party or for checking whether to update the terminal function information, provides instructions to display the terminal function information in the display 109, and further provides instructions to refer to or synchronize with the terminal function information of the database in the mobile communication network center.

The mode setting section 106 makes a setting for automatically transmitting the terminal function information of the user terminal of the user to a user terminal of a communicating party after finishing a call. When the user enters an automatic transmission mode i.e. makes the automatic transmission mode ON, according to the entry of the user, the mode setting section 106 provides instructions to automatically transmit the terminal function information of the user terminal of the user to a user terminal of a communicating party after finishing a call. By this means, the terminal function information of the user terminal of the user stored in the memory 105 is extracted and transmitted from the communication control section 102 via the core network 2 to the user terminal of the communicating party with which the call is completed. In such an automatic transmission mode, the user does not need input operation such as operation for a checking screen, thus being useful for the user. Meanwhile, when the automatic transmission mode is made OFF, a checking screen is displayed in the display 109 before transmitting the terminal function information of the user terminal of the user to the user terminal of the communicating party after a call, and after checking on the screen, the terminal function information of the user terminal of the user is transmitted to the user terminal of the communicating party.

The application control section 107 executes an application program created in application language (for example, Java (Trademark) language) according to instructions of the control section 103. The application control section 107 starts up an application in performing database synchronization processing with the mobile communication network center 3. In other words, the application control section 107 executes an application program for database synchronization.

According to instructions of the control section 103, the display control section 108 displays various images and/or characters in the display 109. For example, upon receiving instructions to display a list of the terminal function information from the control section 103, the display control section 108 displays the terminal function information stored in the memory 105 in the display 109 in a predetermined format. In addition, the format is not limited particularly. Further, the display control section 108 distinguishes between usable and unusable terminal functions in the mobile terminal to display. For example, usable terminal functions in the mobile terminal of the user are display in a list, and in the list, unusable terminal functions in the mobile terminal of the communicating party are grayed out. By this means, the user is capable of checking terminal functions and service usable in the mobile terminal of the communicating party at a glance.

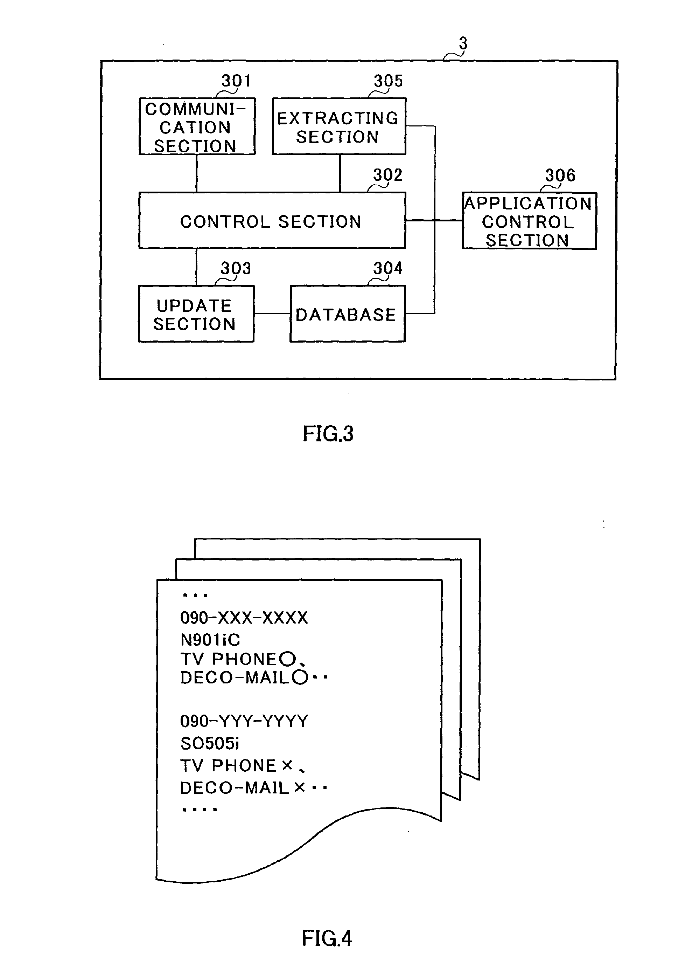

FIG.3 is a schematic block diagram illustrating the mobile communication network center 3 in the function information notifying system according to this embodiment of the invention. The mobile communication network center 3 is mainly comprised of a communication section 301 that performs wireless communication and wired communication, a control section 302 that controls the entire center, an update section 303 that updates a database 304 with the terminal function information for each user, an extracting section 305 that extracts the terminal function information of a specific user terminal from the database 304, and an application control section 306 that operates an application. The mobile communication network center 3 is connected to another terminal apparatus, for example, such as a personal computer (PC) or the like via a network such as the internet, has the gateway function of connecting the mobile communication network with the network such as the internet, and more specifically, has an information distribution function, mail transmission/reception function, mail storage function, contract customer management function, information provider management function, and information fee charging function.

The communication section 301 transmits and receives a signal including the terminal function information to/from the mobile terminal 1. Further, the communication section 301 communicates with the mobile terminal 1 in database synchronization. The terminal function information included in the signal from the mobile terminal 1 is output to the update section 303 by the control section 302. The terminal function information extracted from the database 304 is transmitted to the mobile terminal 1 from the communication section 301 by the control section 302. Further, the communication section 301 refers to the database having the terminal function information of user terminals in the communication network center, and performs database synchronization processing with the mobile communication network center.

The update section 303 updates the database 304 with the terminal function information from the mobile terminal 1. The database 304 has data files as shown in FIG.4. The terminal function information of communicating parties for each user is managed in the data file as shown in FIG.4. For example, in the data file, for some user, it is managed that a communicating party (090-XXX-XXXX) can use both aTV phone and decoration mail, and that anothercommunicatingparty (090-YYY-YYYY) cannot use both a TV phone and decoration mail. In addition, items in the data file as shown in FIG.4 are not limited to the above, and it is required to at least manage the terminal function information for each user. Further, as an identifying item to identify a communicating party, dedicated identification information such as a user ID may be used as well as a telephone number of a cellular telephone.

The extracting section 305 extracts the terminal function information from the data file of the terminal function information for the user of the mobile terminal 1 that refers to or obtains synchronization of the data base 304 when the mobile terminal 1 refers to the terminal function information or obtains database synchronization. The extracted terminal function information is transmitted to the mobile terminal 1 from the communication section 301, or subjected to the database synchronization processing.

The application control section 306 executes an application program created in application language (for example, Java (Trademark) language) according to instructions of the control section 302. The application control section 306 starts up an application in performing database synchronization processing with the mobile terminal 1. In other words, the application control section 306 executes an application program for database synchronization.

In the function information notifying system having the above-mentioned configuration, the terminal function information of a mobile terminal of a communicating party is transmitted and received to/from another mobile terminal of a communicating party directly or via the mobile communication network center. The terminal function information is displayed in the display of the mobile terminal, and the user checks the information. Then, the terminal function information is discarded, or updated in the user information of the mobile terminal and thereby stored. Alternately, the terminal function information is managed for each user in the database of the mobile communication network center, and when necessarily, referred to or subjected to database synchronization by the mobile terminal.

The terminal function information is thus transmitted and received between mobile terminals, and whennecessary, displayed in the display, and it is thereby possible to grasp usable function and service in a mobile terminal of a communicating party in a visual form, and to use the service suitable for the function usable in the mobile terminal of the communicating party. In other words, it is possible to beforehand know the usable service of the communicating party, and the originator is thus capable of easily determining the function to use in performing communication. In this way, problems do not occur, for example, that a user does not know whether the communicating party supports a TV phone when the user wants to place a TV phone, or whether the communicating party supports a decoration mail when the user wants to get a reply in decoration mail, and the like. New-model mobile terminals are usually provided with new functions, and the new functions can usually be used only among the new-model mobile terminals. When communication is performed between a new-model mobile terminal and old-model mobile terminal, since a difference in function exists between the mobile terminals, this system can be used effectively.

A function information notifying method of the invention will be described below with reference to FIGs . 5 to 17. In the function information notifying method according to this embodiment, for example, five following aspects are available according to timing of notifying the terminal function information: In other words;
- First aspect: temporary type of not holding the terminal function information of a communicating party (inter-mobile terminal notifying scheme)
- Second aspect: storage type of checking the terminal function information of a communicating party and then storing in the mobile terminal (mobile terminal storing scheme)
- Third aspect: storage type of automatically storing the terminal function information of a communicating party in the mobile terminal (mobile terminal storing scheme)
- Fourth aspect: storage type of automatically or selectively holding the terminal function information of a communicating party in the mobile communication network center (server storing scheme)
- Fifth aspect: synchronization type of performing synchronization processing on the terminal function information between the mobile terminal and the mobile communication network center (server storing + mobile terminal storing scheme)
In addition, the invention is not limited to these aspects.

FIG.5 is a sequence diagram illustrating the first aspect of the function information notifying method according to this embodiment of the invention. In the first aspect, a mobile terminal inquires about the terminal function information to another mobile terminal as a communicating party, another mobile terminal transmits the terminal function information to the mobile terminal, and the terminal function of another mobile terminal is displayed in the display of the mobile terminal. At this point, in another mobile terminal, it is checked whether to transmit the terminal function information to the mobile terminal.

First, a user terminal A inquires of a user terminal B for the terminal function information (ST11). For example, there is a case that when a user (Taro Dokodemo) of the user terminal A wants to communicate with a user (Hanako Itsudemo) of the user terminal B in some service, the user terminal A checks whether the user terminal B can use the service. More specifically, in the user terminal A, when an address of the user terminal B is found in the address book, a screen as shown in FIG.6A is displayed in the display 109 by the display control section 108. Then, when selecting a region of the terminal information, a checking screen as shown in FIG. 6B is displayed in the display 109 by the display control section 108. Then, when selecting "YES", a request signal for requesting the terminal function information is transmitted to the user terminal B via the communication control section 102 by instructions of the control section 103.

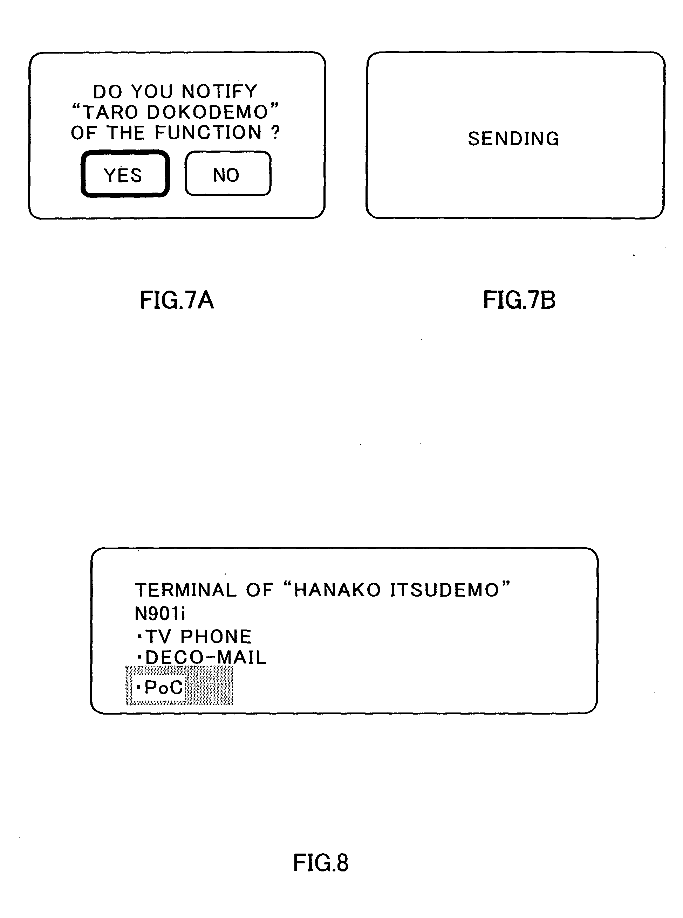

When the user terminal B receives the request signal from the user terminal A via the communication control section 102, the control section 103 instructs the display control section 108 to display in the display 109 a checking screen to check whether the user (the user terminal B) permits the terminal function information of the terminal (the user terminal B) to be transmitted to the user terminal A. According to the instructions, the display control section 108 displays the checking screen as shown in FIG. 7A in the display 109 (ST12). Then, when the user B selects "YES", the terminal function information is extracted from the memory 105 by instructions of the control section 103 and transmitted to the user terminal A via the communication control section 102 (ST13). During transmission of the terminal function information, a screen as shown in FIG.7B is displayed in the display 109 of the user terminal B.

Next, when the user terminal A receives the terminal function information from the user terminal B via the communication control section 102 (ST14), the control section 103 instructs the display control section 108 to display the terminal function information of the user terminal B in the display 109. According to the instruction, the display control section 108 displays a terminal function list as shown in FIG.8 in the display 109 (ST15). By this means, the user (Taro Dokodemo) of the user terminal A is capable of checking at a glance that the user terminal B permits use of TV phone and decoration mail, while not permitting use of PoC (grayed out).

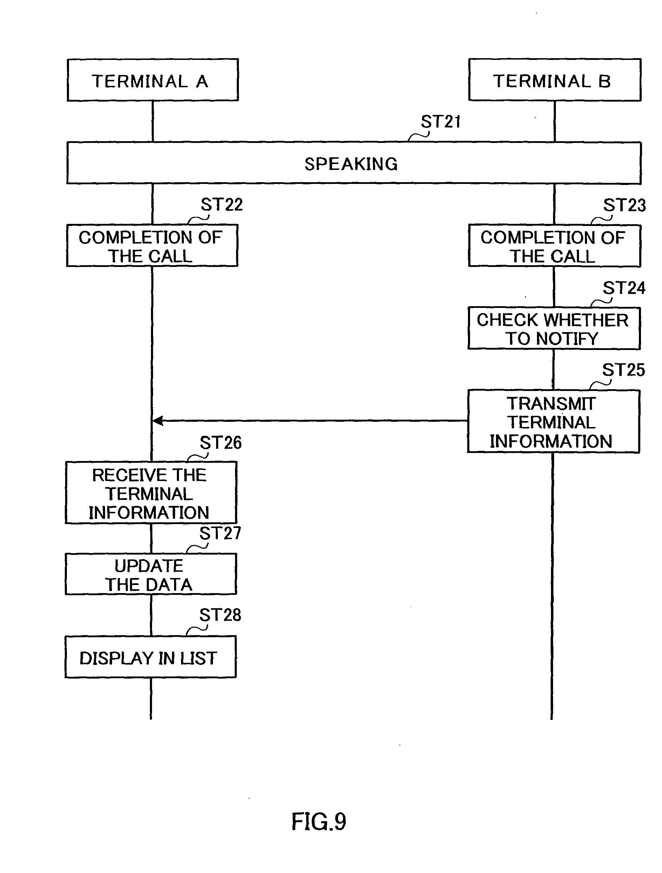

FIG. 9 is a sequence diagram illustrating the second aspect of the function information notifying method according to this embodiment of the invention. In the second aspect, after a conversation is completed between a mobile terminal and another mobile terminal, another mobile terminal transmits the terminal function information to the mobile terminal, and the terminal function information of another mobile terminal is stored in the display of the mobile terminal, while the terminal functions of another mobile terminal are displayed in the display of the mobile terminal. At this point, in another mobile terminal, it is checked whether to transmit the terminal function information to the mobile terminal.

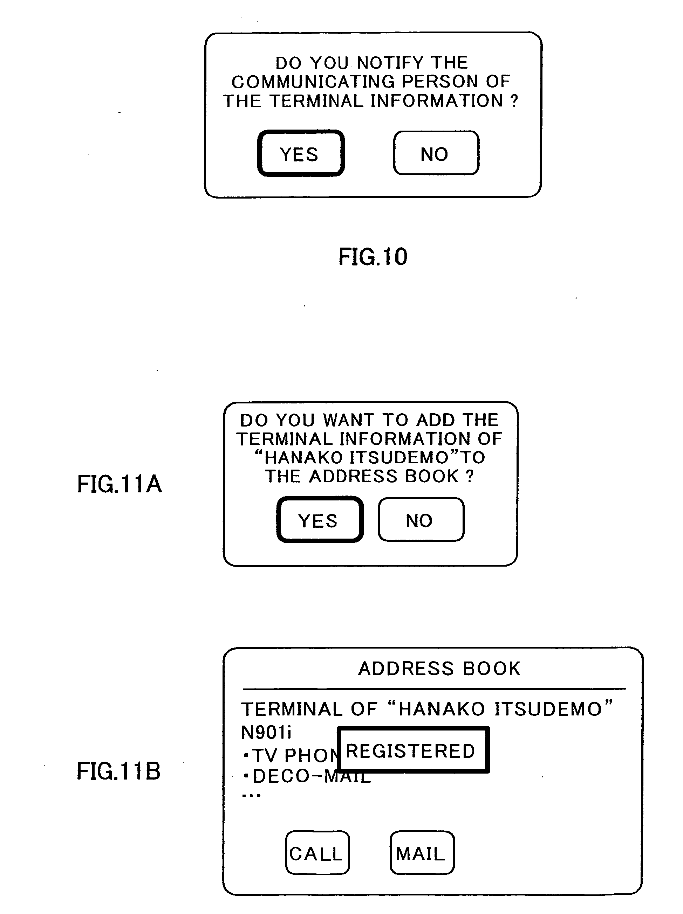

First, a conversation is performed between the user terminal A and user terminal B (ST21), and when the conversation is completed (ST22, ST23), the control section 103 instructs the display control section 108 to display in the display 109 a checking screen to check whether the user (of the user terminal B) permits the terminal function information of the terminal (user terminal B) to be transmitted to the user terminal A.
According to the instruction, the display control section 108 displays the checking screen as shown in FIG.10 in the display 109 (ST24). Then, when the user selects "YES", by instructions of the control section 103, the display control section 108 extracts the terminal function information from the memory 105 to transmit to the user terminal A via the communication control section 102 (ST25). During the transmission of the terminal function information, a screen as shown in FIG.7B is displayed in the display 109 of the user terminal B.

Next, when the user terminal A receives the terminal function information from the user terminal B via the communication control section 102 (ST26), the control section 103 instructs the display control section 108 to display in the display 109 a screen to check whether to update the memory 105 with the terminal function information of user terminal B. According to the instruction, the display control section 108 displays the checking screen as shown in FIG.11A in the display 109 (ST24). Then, when the user selects "YES", by instructions of the control section 103, the update section 104 updates the memory 105 with the received terminal function information of the user terminal B (ST27). At this point, the screen as shown in FIG.11B is displayed in the display 109. Further, the control section 103 instructs the display control section 108 to display the terminal function information of the user terminal B in the display 109. According to the instruction, the display control section 108 displays the terminal function list as shown in FIG. 8 in the display 109 (ST28). By this means, the user (Taro Dokodemo) of the user terminal A is capable of checking at a glance that the user terminal B permits use of TV phone and decoration mail, while not permitting use of PoC (grayed out).

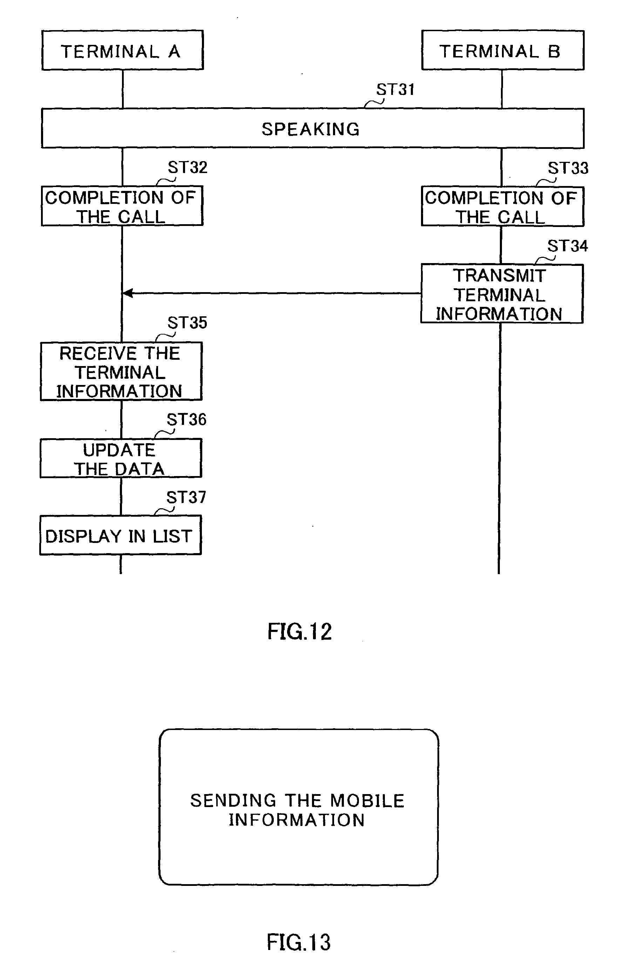

FIG. 12 is a sequence diagram illustrating the third aspect of the function information notifying method according to this embodiment of the invention. In the third aspect, after a conversation is completed between a mobile terminal and another mobile terminal, another mobile terminal transmits the terminal function information to the mobile terminal, and the terminal function information of another mobile terminal is stored in the display of the mobile terminal, while the terminal functions of another mobile terminal are displayed in the display of the mobile terminal. At this point, in another mobile terminal, the terminal function information is automatically transmitted to the mobile terminal after the completion of the conversation. In this case, in another mobile terminal (user terminal B), a mode is set that the terminal function information of the user terminal B is automatically transmitted to a communicating party (with which the conversation is made). More specifically, when the user makes the mode setting ON, the control section 103 instructs the mode setting section 106 to set the automatic transmission mode of the terminal function information, and according to the instruction, the mode setting section 106 switches to the automatic transmission mode.

First, a conversation is performed between the user terminal A and user terminal B (ST31), and when the conversation is completed (ST32, ST33), the control section 103 automatically extracts the terminal function information from the memory 105 to transmit to the user terminal A via the communication control section 102 (ST34). During the transmission of the terminal function information, a screen as shown in FIG.13 is displayed in the display 109 of the user terminal B.

Next, when the user terminal A receives the terminal function information from the user terminal B via the communication control section 102 (ST35), the control section 103 instructs the display control section 108 to display in the display 109 a screen to check whether to update the memory 105 with the terminal function information of user terminal B. According to the instruction, the display control section 108 displays the checking screen as shown in FIG.11A in the display 109. Then, when the user selects "YES", by instructions of the control section 103, the update section 104 updates the memory 105 with the received terminal function information of the user terminal B (ST36). At this point, the screen as shown in FIG.11B is displayed in the display 109. Further, the control section 103 instructs the display control section 108 to display the terminal function information of the user terminal B in the display 109. According to the instruction, the display control section 108 displays the terminal function list as shown in FIG.8 in the display 109 (ST37). By this means, the user (Taro Dokodemo) of the user terminal A is capable of checking at a glance that the user terminal B permits use of TV phone and decoration mail, while not permitting use of PoC (grayed out).

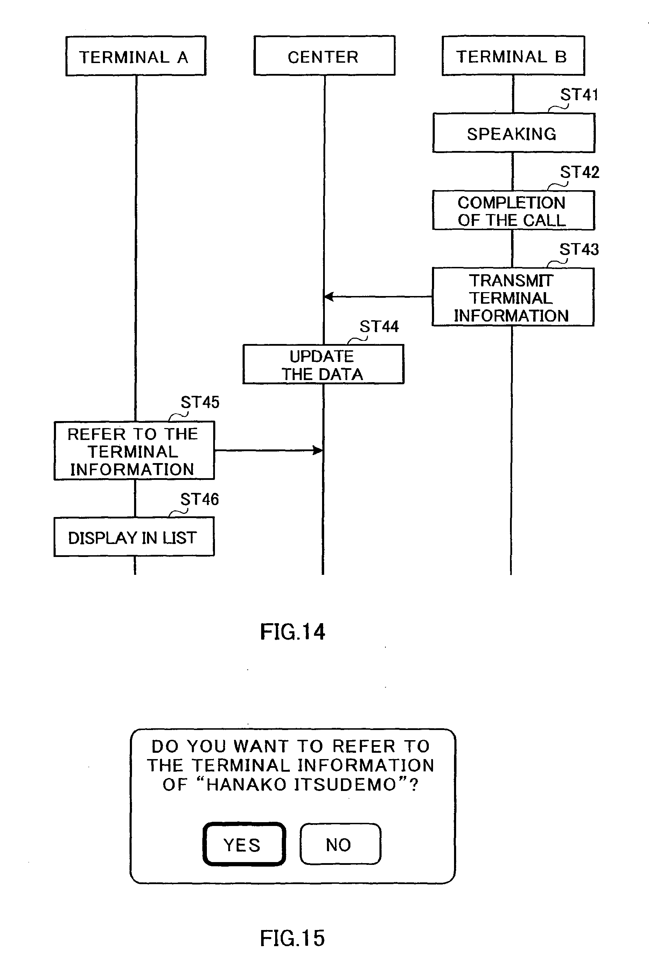

FIG.14 is a sequence diagram illustrating the fourth aspect of the function information notifying method according to this embodiment of the invention. In the fourth aspect, after a conversation is completed, another mobile terminal transmits the terminal function information to the mobile communication network center, and the mobile communication network center updates the database with the terminal function information. The mobile terminal refers to the terminal function information of a desired user in the database of the mobile communication network center, and terminal functions of another mobile terminal are displayed in the display of the mobile terminal. At this point, in another mobile terminal, after the conversation is completed, the terminal function information is automatically transmitted to the mobile communication network center. In this case, in another mobile terminal (user terminal B), a mode is set that the terminal function information of the terminal (user terminal B) is automatically transmitted to the mobile communication network center after the completion of a call. More specifically, when the user makes the mode setting ON, the control section 103 instructs the mode setting section 106 to set the automatic transmission mode of the terminal function information, and according to the instruction, the mode setting section 106 switches to the automatic transmission mode. In addition, the case is described herein that the terminal function information is automatically transmitted to the mobile communication network center 3 after the completion of a call, but as in the second aspect, a checking screen may be displayed before transmitting the terminal function information to the mobile communication network center 3 to enable the user to check.

First, the user terminal B has a conversation with another user terminal (ST41), and when the conversation is completed (ST42), the control section 103 automatically extracts the terminal function information from the memory 105 to transmit to the mobile communication network center 3 via the communication control section 102 (ST43). During the transmission of the terminal function information, a screen as shown in FIG.13 is displayed in the display 109 of the user terminal B. Then, in the mobile communication network center 3, the update section 303 updates the data file as shown in FIG.4 of the database 304 with the terminal function information of the user terminal B (ST44). In this way, when the terminal function information is stored in the mobile communication network center 3, the user terminal is capable of acquiring the terminal function information whenever communicating with the mobile communication network center 3 as necessary.

The user terminal A acquires the terminal function information of the user terminal B by communicating with the mobile communication network center 3 at any timing. First, when the user terminal A finds an address of the user terminal B in the address book, the display control section 108 displays the screen as shown in FIG.6A in the display 109. Then, when the user selects a region of the terminal information, the control section 103 instructs the display control section 108 to display in the display 109 a screen to check whether to refer to the terminal function information of the user terminal B in the mobile communication network center 3. According to the instruction, the display control section 108 displays a checking screen as shown in FIG.15 in the display 109. When, the user selects "YES", by instructions of the control section 103, the user terminal A communicates with the communication section 301 of the mobile communication network center 3 via the communication control section 102, and refers to the database 304 of the mobile communication network center 3 (ST45). Further, the control section 103 instructs the display control section 108 to display the terminal function information of the user terminal B in the display 109. According to the instruction, the display control section 108 displays the terminal function list as shown in FIG.8 in the display 109 (ST46). By this means, the user (Taro Dokodemo) of the user terminal A is capable of checking at a glance that the user terminal B permits use of TV phone and decoration mail, while not permitting use of PoC (grayed out).

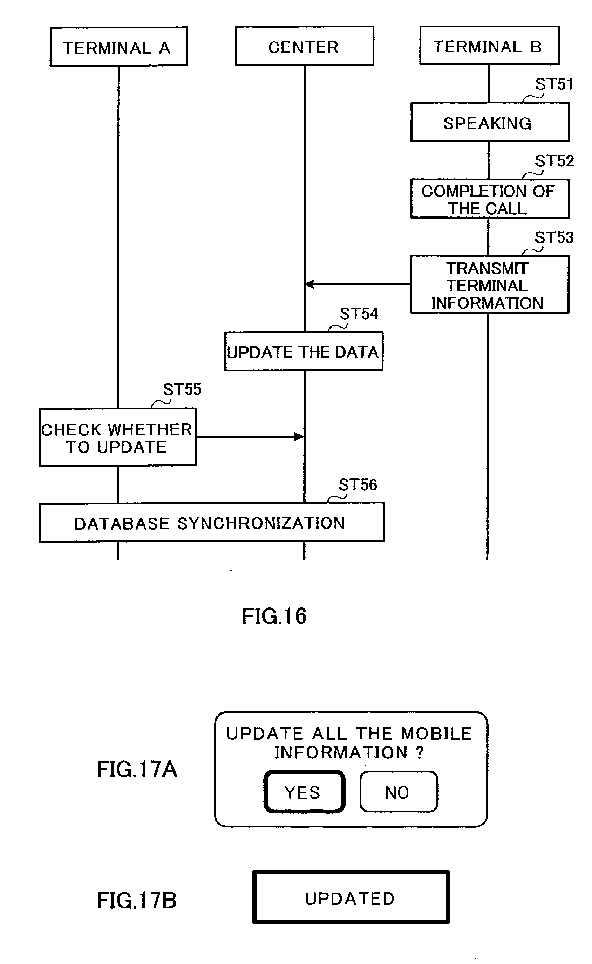

FIG.16 is a sequence diagram illustrating the fifth aspect of the function information notifying method according to this embodiment of the invention. In the fifth aspect, after a call is completed, another mobile terminal transmits the terminal function information to the mobile communication network center, and the mobile communication network center updates the database with the terminal function information. The mobile terminal synchronizes in terminal function information with the mobile communication network center, and terminal functions of amobile terminal are displayed in the display of the mobile terminal. At this point, in another mobile terminal, after the call is completed, the terminal function information is automatically transmitted to the mobile communication network center. In this case, in another mobile terminal (user terminal B), a mode is set that the terminal function information of the terminal (user terminal B) is automatically transmitted to the mobile communication network center after the completion of a call. More specifically, when the user makes the mode setting ON, the control section 103 instructs the mode setting section 106 to set the automatic transmission mode of the terminal function information, and according to the instruction, the mode setting section 106 switches to the automatic transmission mode. In addition, the case is described herein that the terminal function information is automatically transmitted to the mobile communication network center 3 after the completion of a call, but as in the second aspect, a checking screen may be displayed before transmitting the terminal function information to the mobile communication network center 3 to enable the user to check.

First, the user terminal B has a conversation with another user terminal (ST51), and when the conversation is completed (ST52), the control section 103 automatically extracts the terminal function information from the memory 105 to transmit to the mobile communication network center 3 via the communication control section 102 (ST53). During the transmission of the terminal function information, the screen as shown in FIG.13 is displayed in the display 109 of the user terminal B. Then, in the mobile communication network center 3, the update section 303 updates the data file as shown in FIG.4 of the database 304 with the terminal function information of the user terminal B (ST54). In this way, when the terminal function information is stored in the mobile communication network center 3, the user terminal is capable of acquiring the terminal function information whenever communicating with the mobile communication network center 3 as necessary.

The user terminal A acquires the terminal function information of the user terminal B by communicating with the mobile communication network center 3 at any timing. First, in the user terminal A, at timing at which database synchronization is performed, the control section 103 instructs the display control section 108 to display in the display 109 a screen to check whether to acquire data synchronization. According to the instruction, the display control section 108 displays a checking screen as shown in FIG.17A in the display 109 (ST55). When, the user selects "YES", by instructions of the control section 103, the application control section 107 starts up an application for database synchronization. At this point, the user terminal A communicates with the communication section 301 of the mobile communication network center 3 via the communication control section 102. Then, the application control section 306 of the mobile communication network center 303 also starts up an application for database synchronization. By this means, the database synchronization processing is performed between the user terminal A and mobile communication network center 3, and the data (terminal function information) is updated (ST56). At this point, a screen as shown in FIG.17B is displayed in the display 109. Thus, by performing database synchronization, the user terminal is capable of acquiring the terminal function information collectively to update.

Further, when the user refers to the address book, the control section 103 instructs the display control section 108 to display the terminal function information of the user terminal B in the display 109. According to the instruction, the display control section 108 displays the terminal function list as shown in FIG.8 in the display 109. By this means, the user (Taro Dokodemo) of the user terminal A is capable of checking at a glance that the user terminal B permits use of TV phone and decoration mail, while not permitting use of PoC (grayed out).

In addition, the above-mentioned first to fifth aspects are capable of being carried into practice in a combination thereof as appropriate.

The present invention is not limited to the above-mentioned embodiment, and is capable of being carried into practice with various modifications thereof. For example, characters and layouts of display in the display in the above-mentioned embodiment are examples, and capable of being modified and implemented as appropriate. For example, in the above-mentioned embodiment, an unusable terminal function in a user terminal is grayed out in the display to distinguish between the usable terminal function and unusable terminal function in the user terminal to be displayed, but the invention is not limited in a form of display when the form enables the usable terminal function and unusable terminal function to be distinguished and displayed. Further, the case is described in the above-mentioned embodiment that a user terminal searches for a communicating party, and displays a list of terminal functions usable in a user terminal of the communicating party to grasp. The invention further enables another case where a terminal function that a user wants to use is selected, user terminals supporting the selected terminal function are extracted from the address book, and the extracted users are displayed in a list. Further, procedures in each aspect are capable of being modified as appropriate within the scope that a person skilled in the art could practice. Furthermore, the invention is capable of being carried into practice with various modifications thereof without departing from the scope of the invention.

## Claims

1. A system for notifying function information in which terminal function in formation is transmitted and received between mobile terminals, wherein a first mobile terminal has a communication section that receives terminal function information of a second mobile terminal, and a display section that displays the terminal function information.

2. The system for notifying function information according to claim 1, wherein the communication section transmits a request signal for the terminal function information to the second mobile terminal.

3. The system for notifying function information according to claim 1, wherein each of the first mobile terminal and the second mobile terminal has a mode setting section capable of setting a mode to automatically transmit the terminal function information after completion of a call.

4. A system for notifying function information in which terminal function information is transmitted and received between mobile terminals via a mobile communication network center, wherein the mobile communication network center has a database having terminal function information of mobile terminals, and an update section that updates the database with the terminal function information, and a first mobile terminal has a communication section that communicates with the mobile communication network center.

5. The system for notifying function information according to claim 4, wherein the communication section refers to the database of the mobile communication network center in communicating with the mobile communication network center.

6. The system for notifying function information according to claim 4, wherein the communication section performs database synchronization processing with the mobile communication network center.

7. The system for notifying function information according to claim 4, wherein the first mobile terminal has a display section that displays the terminal function information.

8. The system for notifying function information according to claim 1, wherein the display section distinguishes between a usable terminal function in the first mobile terminal and an unusable terminal function in the first mobile terminal to display.

9. A method of notifying function information where terminal function information is transmitted and received between mobile terminals, comprising:
a terminal function information transmitting step of transmitting, in a second mobile terminal, terminal function information to a first mobile terminal; and
a display step of displaying, in the first mobile terminal, the terminal function information.
